# EUROPEAN PATENT SPECIFICATION

(11) **EP 3 112 084 B1**
(45) Date of publication and mention of the grant of the patent: **14.11.2018**
(21) Application number: 16176823.9
(22) Date of filing: 29.06.2016
(51) Int. Cl.: B23Q 1/54

(54) **BI-ROTATING MACHINING HEAD**
DOPPELDREHBEARBEITUNGSKOPF
TETE D'USINAGE BIROTATIVE

(30) Priority: 30.06.2015 IT UB20151811
(43) Date of publication of application: 04.01.2017
(73) Proprietor: C.M.S. S.p.A., 24019 Zogno (BG) (IT)
(72) Inventor: RINALDI, Nicola, 24125 Bergamo (IT); PESENTI, Gino, 24031 Almenno S.Salvatore (BG) (IT); ALVANINI, Marco, 24020 Villa di Serio (BG) (IT)
(74) Representative: Villanova, Massimo

(56) References cited:
- EP-A1- 0 010 043
- EP-A1- 1 514 624
- DE-A1-102005 005 905
- DE-A1-102011 003 009
- FR-A1- 2 986 172

## Description

### Background of the invention

The invention relates to a bi-rotating machining head, in particular for machining by removing material (for example milling, drilling, cutting, notching, finishing etc) on objects made of a machinable material (for example wood, resin, composite material, aluminium, PVC, steel, light alloy, etc).

Specifically, but not exclusively, the invention may be usefully used in a numerically controlled machining centre with five controlled axes, in particular for machining irregular surfaces, in particular for workpieces of non-nominal shapes and dimensions, for example workpieces obtained from mechanical machining (pressing, folding, calendaring, drawing, etc.) that in general do not ensure the precision of the workpiece.

In order to perform complex machining tasks on irregular surfaces, for example on workpieces of non-nominal shapes and dimensions, the prior art comprises floating devices to be fitted to the tool holder, in which the function of adapting to the non-regular workpiece is integrated into a tool holder shaft coupled with the spindle to supply an axial adjusting movement to the spindle, for example by grooved coupling with contrasting springs for maintaining contact with the workpiece.

The aforesaid prior art floating devices nevertheless have certain limits and drawbacks. Firstly, the floating device, in which the compensating movement is assigned to a movable portion of the tool holder, removes stiffness from the tool supporting system. Secondly, the floating device is subject to wear and thus to the undesired formation of excessive clearance, with consequent loss of precision. Further, the floating device loses precision and efficacy when the bi-rotating head takes the machining spindle to horizontal or anyway at a certain tilt, because, in that case, as the vertical component of the weight of the floating portion that operates on the workpiece varies significantly, the contrasting springs are no longer able to ensure constant contact force between the tool and workpiece and thus the resulting compensating movement is not the desired movement, so that, in the case of an irregular surface of the workpiece, the machining depth may be different in the zones of the workpiece where the tool has machined with the axis vertical with respect to the zones in which it machined with the axis horizontal, or tilted, entailing machining errors. FR 2 986 172 A1 discloses a bi-rotating machining head as in the preamble of claim 1.

### Summary of the invention

One object of the invention is to make a machining head that is able to overcome one or more of the aforesaid limits and drawbacks of the prior art.

One advantage is machining by removing material at a regular machining height also on irregular surfaces of the workpiece.

One advantage is having a compensating device for compensating possible irregularities of the surface of the workpiece, in which the coupling between the tool and the axis of the electrospindle unit is significantly stiff, precise and reliable over time.

One advantage is enabling machining in which the tool driven by the spindle is always at the correct height with respect to the surface of the workpiece.

One advantage is the considerable stiffness of the tool holder, by virtue of the fact that the compensating movement of the irregularities of the surface of the workpiece does not comprise any relative movement of a portion of the tool holder with respect to the motor of the electrospindle unit that drives the tool holder.

One advantage is providing a machining head to enable workpieces to be machined that are not flat in shape.

One advantage is to provide a machining head for removing material provided with great precision also for irregular surfaces of workpieces of non-nominal shapes and/or dimensions.

One advantage is facilitating adjusting of the machining head in respect of the workpiece.

One advantage is making available a constructionally simple and cheap machining head.

One advantage is creating a machining head that is versatile and adaptable to use on workpieces with irregular surfaces and/or different shapes.

Such objects and advantages and still others are all achieved by the machining head according to one or more of the claims set out below.

In one embodiment, a machining head comprises at least one axis control unit and an electrospindle unit carried by the aforesaid axis control unit, in which the electrospindle unit comprises at least one motor, at least one tool holder driven by the aforesaid motor, and abutting means arranged for abutting on a workpiece and maintaining a desired relative position between the workpiece and the tool, in which a possible irregularity of the workpiece is compensated through the effect of a movement (linear sliding) of the entire electrospindle unit (including motor, tool holder and abutting means) with respect to the aforesaid axis control unit.

In one embodiment, a bi-rotating machining head comprises two axis control units and an electrospindle unit having a tool holder drive motor, in which the electrospindle unit is capable of a movement (for example linear sliding) with respect to the axis control unit that supports the electrospindle unit, this movement being suitable for compensating possible irregularities of the surface of the workpiece, in order for a relative desired position to be maintained between the workpiece and the tool driven by the electrospindle unit.

In one embodiment, a machining head comprises at least one axis control unit, at least one electrospindle unit carried by the aforesaid axis control unit, and at least abutting means arranged for abutting on a workpiece in such a manner as to maintain a desired relative positioning between the workpiece and a tool rotated by the electrospindle unit, said electrospindle unit (comprising in particular motor and/or transmission and/or tool holder) and said abutting means forming a unit that has, in block, a (linear) movement with respect to said axis control unit, to maintain the aforesaid desired relative positioning to compensate possible irregularities of the workpiece.

In one embodiment, a (bi-rotating) machining head comprises a compensating device for compensating the irregularities of the surface of the workpiece, in which the compensating movement is assigned to the entire electrospindle unit (including the tool holder driving motor), which can be connected to a control unit, which adjusts at least one controlled axis of the machining head, with at least one degree of freedom (for example with a sliding linear movement).

### Brief description of the drawings

The invention can be better understood and implemented with reference to the attached drawings that illustrate some embodiments thereof by way of non-limiting examples.
Figure 1 is a perspective view of a first embodiment of a bi-rotating head made according to the invention.
Figure 2 is a partially sectioned side view of the head of figure 1.
Figure 3 is a perspective view of a second embodiment of a bi-rotating head made according to the invention.
Figure 4 is a partially sectioned side view of the head of figure 3.

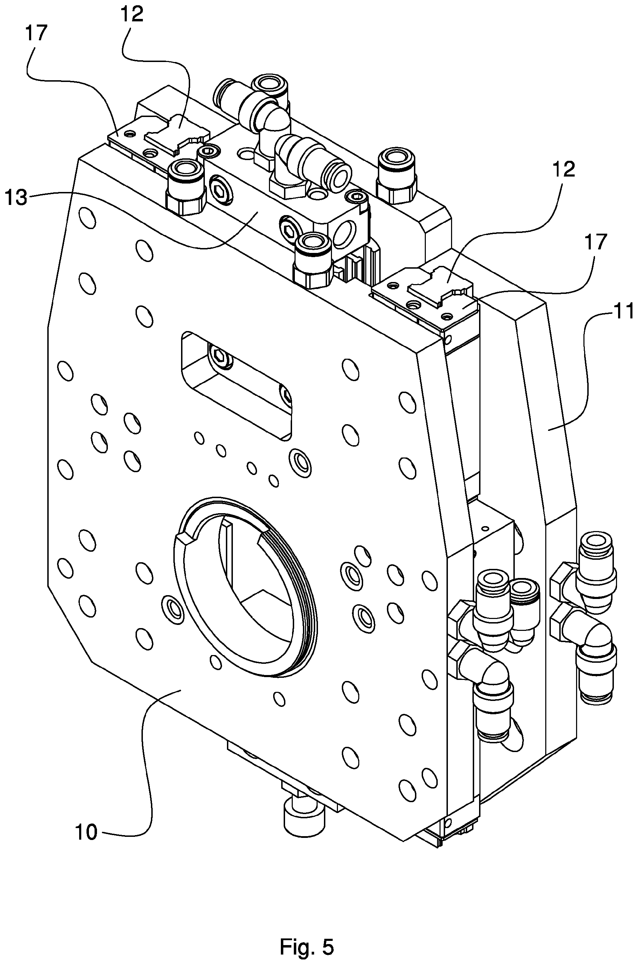

Figure 5 is a perspective view of a group of elements that make up the bi-rotating head of figure 1 or the bi-rotating head of figure 3.

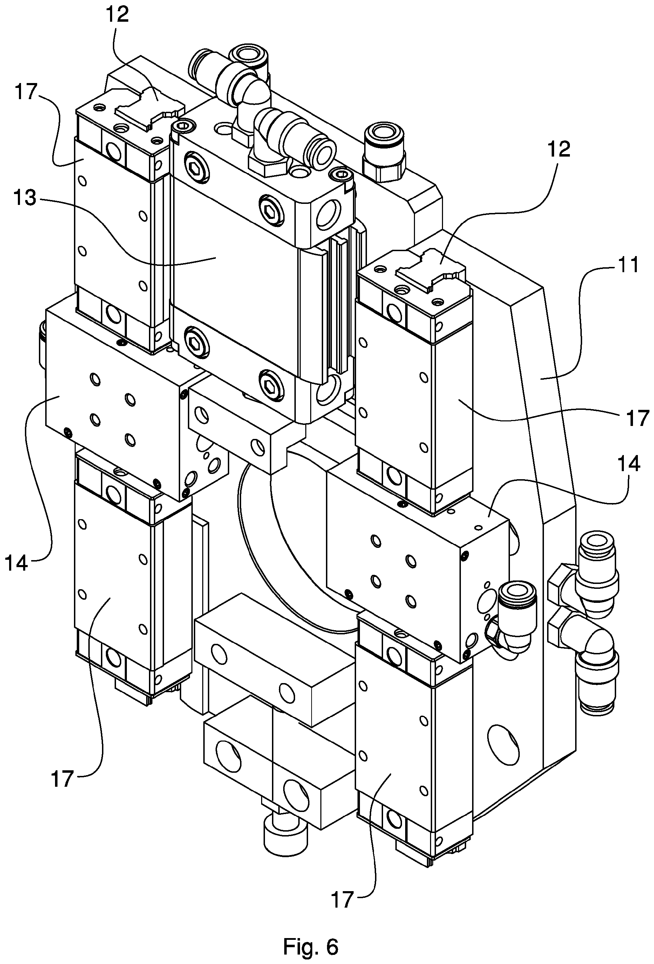

Figure 6 shows the same view of figure 5 with some parts removed in order to highlight other parts thereof better.
Figure 7 is a perspective view of a bi-rotating head of figure 3 whilst it machines a workpiece of curved shape.

### Detailed description

With reference to the aforesaid figures, overall with 1 there has been indicated a (bi-rotating) machining head for a numerically controlled machining centre, in particular for machining workpieces made of wood, aluminium, plastics, composite materials, etc. The head 1 may be used, for example, for machining (for example milling, drilling, cutting, notching, finishing etc) workpieces with a complex shape (of curved or non-flat shape) and/or with irregular surfaces or non-nominal surfaces.

The numerically controlled machining centre may be, for example, a centre with five controlled machining axes X, Y, Z, C, A, in which the three X, Y, Z axes are associated with the part of the machining centre that supports the machining head 1, whereas the other two C and A axes are associated with the head.

The bi-rotating head 1 may comprise, as in this embodiment, a first axis control unit (of a first controlled axis C, for example a vertical axis) and a second axis control unit (of a second controlled axis A, which is tilted, for example by 90° with respect to the first controlled axis) carried by the first control unit of the first axis C. In the context of the present description, "axis control unit" is defined as the unit that comprises the various means for driving the adjustment of a controlled axis, such as, for example, the servomotor and the sensor means (encoder) to detect the movement of at least one movable part driven by the servomotor. The axis control units (of the C and A axes) of the bi-rotating head 1 may comprise two axis control units that are of known type and are accordingly not disclosed in greater detail. In general, each axis control unit may comprise at least one servomotor and a transmission (speed reducer) and/or (encoder) sensor means. In the figures, with 2 there has been overall indicated a group that contains at least in part the servomotors and/or the transmissions and/or the sensor means for adjusting the two controlled axes C and A.

The bi-rotating head 1 may comprise, as in these embodiments, an electrospindle unit 3 that comprises at least one spindle (tool holder 4) and a spindle driving motor. The motor (which may be of known type and is accordingly not illustrated in detail) may rotate the tool holder 4 by a transmission (for example a transmission that is of known type and is not illustrated).

The electrospindle unit 3 (i.e. the group that includes, as in this case, at least one motor and one tool holder 4, and a possible transmission and/or a power take-off) may be carried by the second control unit of the second axis A with the possibility of movement (in particular with at least one degree of freedom, for example with the possibility of performing linear sliding) with respect to the aforesaid second control unit, as will be explained better below.

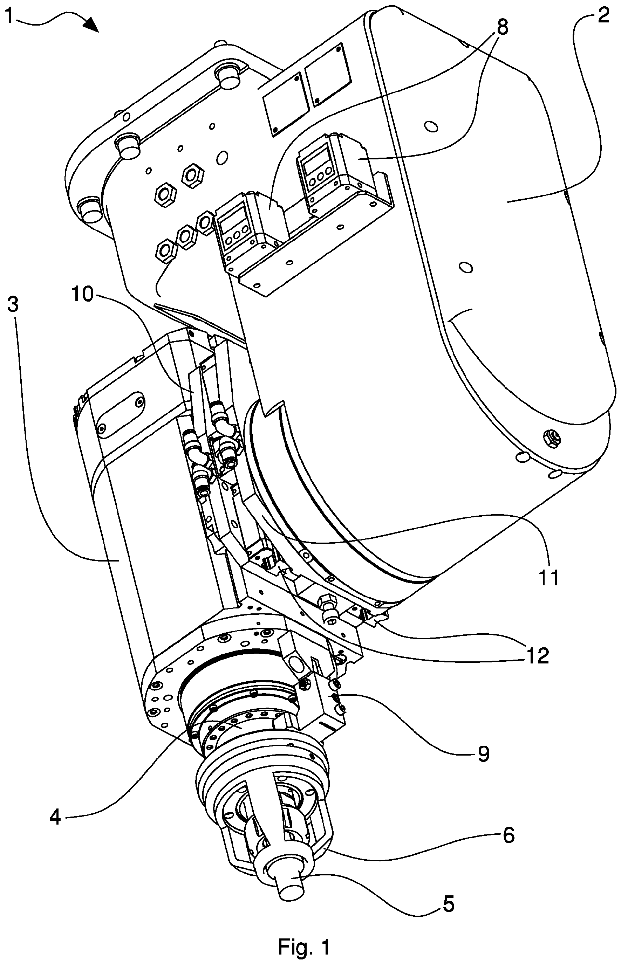

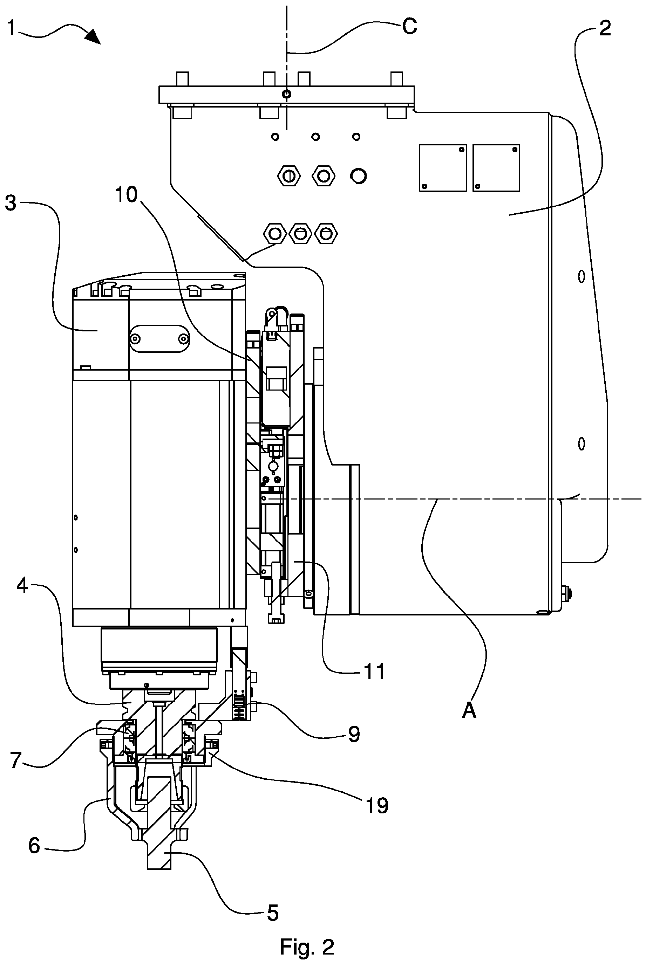

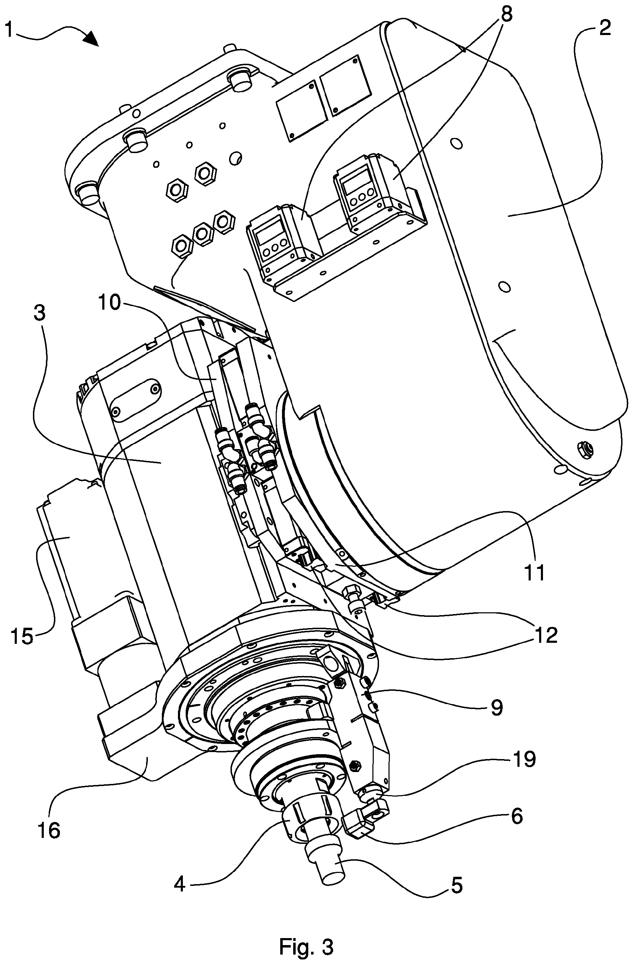

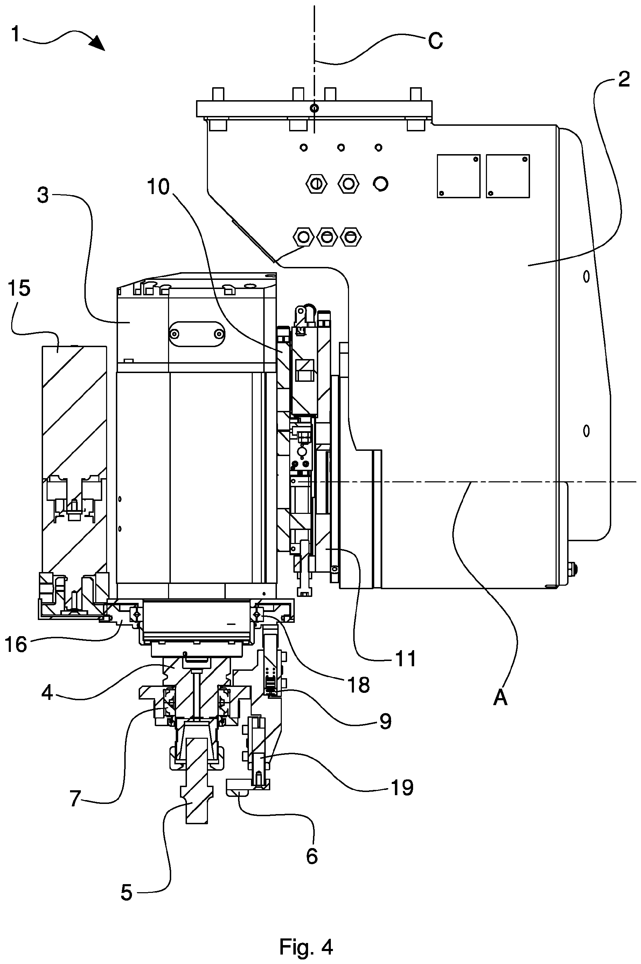

The head 1 may comprise abutting means 6 carried by at least one element of the electrospindle unit 3. The abutting means 6 may be fitted, for example, to the tool holder 4 so as not to be constrained to the rotation of the tool holder 4 driven by the electrospindle unit 3. The abutting means 6 may be arranged, in particular, for abutting on a workpiece P being machined in such a manner as to maintain desired relative positioning between the workpiece P being machined and a tool 5 carried by the tool holder 4. A possible irregularity of the surface being machined of the workpiece may be compensated through the effect of the aforesaid compensating movement of the electrospindle unit 3 with respect to the second control unit of axis A. The abutting means 6 (in the embodiment of figures 1 and 2 the abutting means 6 has a contact portion of circular shape that surrounds the tool 5, whereas in the embodiment of figures 3 and 4 the abutting means 6 has a contact portion that is almost a spot contact arranged to the side of the tool 5) may be fitted to the tool holder 4, so as to be fittable and removable together with the tool 5.

The aforesaid compensating movement may comprise, as in this embodiment, a linear movement, in particular a linear movement parallel to a rotation axis of the tool holder 4.

The electrospindle unit 3 may be coupled with the second control unit of axis A by sliding guiding means 12. In particular, the head 1 may comprise a slide 10 that supports the electrospindle unit 3. The slide 10 may be, as in this specific case, slidably coupled by the guiding means 12, on a base 11 carried by the second control unit of axis A. The aforesaid compensating movement may comprise, in particular, linear sliding along the aforesaid guiding means 12.

The slide 10 may comprise, for example, at least one plate-shaped portion. The base 11 may comprise, for example, at least one plate-shaped portion. The aforesaid plate-shaped portions may be, in particular, facing parallel to one another with the interposition of runner block means 17.

The head 1 may comprise, as in the embodiment disclosed here, actuating means 13 arranged for controlling the aforesaid compensating movement of the electrospindle unit 3 with respect to the second control unit of axis A.

The head 1 may comprise, in particular, programmable electronic control means for controlling the actuating means 13 in such a manner as to adjust a contact force between the abutting means 6 and the workpiece P being machined.

The actuating means 13 may act, in particular, as (fluidly) elastic means that maintains the abutting means 6 pressed against the workpiece P being machined with an elastic contact force that is variable in a controlled manner.

The actuating means 13 may comprise, for example, at least one linear actuator. The actuating means 13 may be, in particular, of the type with driving operating fluid. The actuating means 13 may be controlled by valve means 8 (for example of proportional type). In particular, the actuating means 13 may comprise at least one dual effect fluid linear actuator provided with at least two proportional valves (one for each chamber) for adjusting the pressure in two opposite operating chambers of the dual effect actuator.

The (electronic and programmable) controlling means may comprise, in particular, means for adjusting the contact force between the abutting means 6 and the workpiece. In particular such adjusting means is configured for adjusting the aforesaid contact force as a function of the angle of the second axis A (corresponding to the angle of tilt of the electrospindle unit 3 controlled by the second axis A). The aforesaid adjusting means may comprise, for example, computer program instructions that are implementable by the aforesaid control means.

In the specific case, the electronic control means (for example a microprocessor of the numerically controlled machining centre) receives a signal from sensor means (for example encoder means) associated with the second axis A. This signal indicates the angle of the second controlled axis A, i.e. of the angle of tilt of the electrospindle unit 3 around the second controlled axis A, in other words the angle with which the second controlled axis A adjusts the (angular) position of the electrospindle unit 3. This signal may be accordingly variable during machining as a function of the machining angle of the second axis A.

The control means may be programmed for feedback controlling of the actuating means 13 according to the aforesaid signal, in particular (in the case of actuating means with operating fluid) in such a manner as to adjust the pressure of the operating fluid in the actuating means 13, in order to adjust the contact force between the abutting means 6 and the workpiece. In particular, the pressure of the operating fluid (in the two chambers) of the actuating means 13 may be variable as a function of the machining angle of the second axis A (angle of tilt of the electrospindle unit 3), by the feedback control system, in order for the aforesaid contact force to be constantly equal to a desired value whatever the angle of the second axis A. The desired value (set point) of the pressure of the operating fluid of the actuating means 13 (on which the effective contact force between the abutting means 6 and workpiece P depends) may be variable and set, each time, as a function of machining parameters, for example according to the materials being machined, the machining tasks to be performed, etc.

The head 1 may comprise, as in this embodiment, braking means 14 (for example operating fluid drive braking means 14) arranged for immobilising the electrospindle unit 3 with respect to the second axis A in one or more desired positions.

The head 1 may comprise, for example, rolling supporting means 7 (bearings) for rotatably supporting the abutting means 6 on the electrospindle unit 3, in such a manner as to fit the abutting means 6 to the electrospindle unit 3 (in particular to the tool holder 4) without however constraining the abutting means 6 to the rotation of the tool holder 4. In particular, the abutting means 6 may be supported coaxially (on rolling supporting means) to the tool holder 4 around a coupling axis coinciding with the axis of the tool holder 4.

The head 1 may comprise, as in the embodiments illustrated, anti-rotation means 9 (of removable type) to constrain the abutting means 6 to a fixed part of the electrospindle unit 3, to prevent the abutting means 6 being rotated by the electrospindle unit 3. Such anti-rotation means 9 may comprise, as in these embodiments, a tongue and groove joint, with one part (the tongue) of the joint being integral with the abutting means 6 and the other part (groove) of the joint being integral with the fixed part of the electrospindle unit 3, or vice versa.

It is possible to provide, as in the embodiments disclosed here, for the tool holder 4 and the abutting means 6 forming a single unit (that is fittable and removable as a single block). This unit may comprise, further, the rolling supporting means 7 and/or the anti-rotation means 9 (in addition to the tool 5 that is couplable with the tool holder 4).

In the embodiment of figures 1 and 2, the abutting means 6 comprises a hollow body (in the shape of an upturned bell) provided with several side windows, in which an end portion (in contact with the workpiece) has a substantially circular shape.

The head 1 may comprise, as in the embodiment in figures 3 and 4, positioning means for adjusting an angular position of the abutting means 6 with respect to the electrospindle unit 3. This positioning means may comprise, in particular, driving means 15 arranged on the electrospindleunit 3 for controlling (for example by interposing motion transmitting means 16 and rolling supporting means 18) the rotation of the abutting means 6 around the rolling supporting means 7.

In the embodiment of figures 3 and 4, the abutting means 6 comprises a (tooth-shaped) end portion arranged on one side of the tool holder 4. This end portion may create, as in this embodiment, a contact zone of very limited area (point or spot contact zone).

The aforesaid positioning means enables the circumferential position of the (point or spot) contact zone of the abutting means 6 with the workpiece to be adjusted, in order to select the most suitable angular position for obtaining correct machining. The abutting means 6 with a spot contact portion (figures 3 and 4) and with adjustment of the angular position, can be particularly advantageous for machining concave surfaces.

The head 1 may comprise, as in these embodiments, height adjusting means 19 arranged for enabling an operator to adjust (for example manually) the height of the abutting means 6 with respect to the tool 5, to define, in particular, the machining depth of the tool. This height adjusting means 19 may comprise, in particular, an axial position adjusting mechanism, for example of the micrometric screw type or of another type.

In use, the abutting means 6 is maintained against the surface of the workpiece, in the immediate vicinity of the zone where the tool 5 operates, in particular to obtain machining by removal of material to a preset depth.

In the case of an irregular surface of the workpiece, the entire electrospindle unit 3 can perform a compensating movement (in the specific case by sliding on the guiding means 12) to maintain the contact of the abutting means 6 against the workpiece, in particular in order for the machining depth to remain constant.

The contact force between the abutting means 6 and the workpiece may be maintained substantially constant owing to the control of the actuating means 13, in particular by maintaining the pressure of the operating fluid controlled. In the course of machining, the machining angle of the second axis A controlled by the head 1 could vary, varying, consequently, the contact force due to the weight bearing down on the workpiece P being machined; the total contact force may remain constant by virtue of the feedback system of the control means, a system that will vary the pressure of the operating fluid of the actuating means 13 (according to the angle of the second controlled axis A) in order to maintain constant the result of the forces due to the weight and the thrust of the actuating means 13.

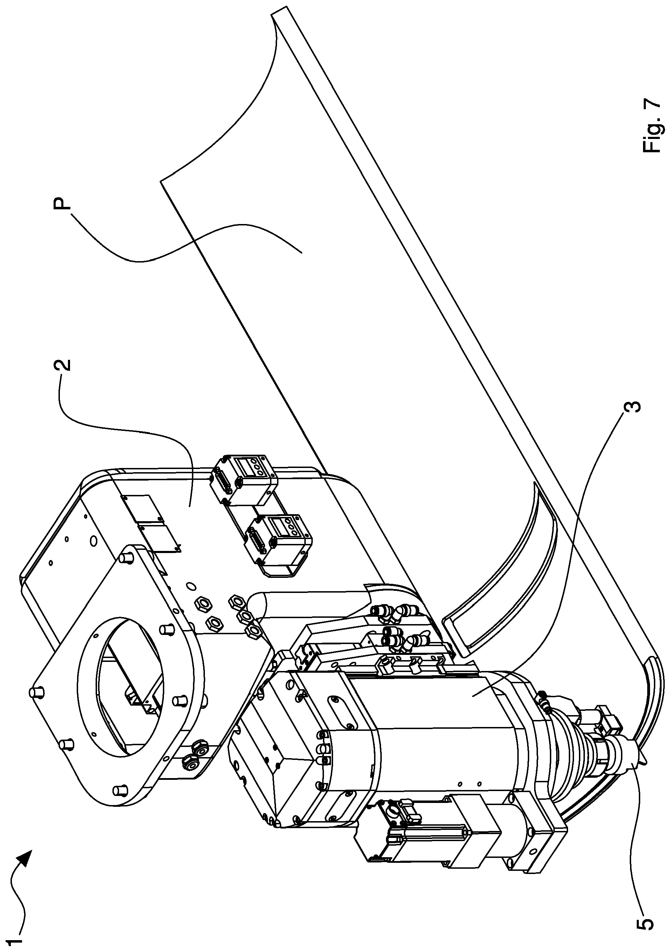

As illustrated in figure 7, the machining head 1 is able to perform machining tasks (in particular on workpieces of curved shape) both in the central part of the workpiece (see figure 7, where machining has already been performed), and on the edge of the workpiece (see figure 7, where machining is taking place), with the possibility of obtaining the advantages mentioned above in both cases.

### Legend

- 1: Bi-rotating machining head with two axis control units
- C: first controlled axis
- A: second controlled axis
- 2: unit with the servomotors of the control units of the C and A axes
- 3: electro spindle unit
- 4: tool holder
- 5: tool
- 6: abutting means
- 7: rolling supporting means
- 8: valve means
- 9: anti-rotation means
- 10: supporting slide
- 11: supporting base
- 12: guiding means
- 13: actuating means
- 14: braking means
- 15: driving means
- 16: motion transmitting means
- 17: runner block means
- 18: rolling supporting means
- 19: height adjusting means
- P: workpiece being machined

## Claims

1. Bi-rotating machining head (1) with two controlled axes (C; A), comprising:
- a first control unit of a first axis (C);
- a second control unit of a second axis (A);
- an electrospindle unit (3) having a motor for rotating a tool holder (4), said electrospindle unit (3) being carried by said second control unit with the possibility of movement with at least one degree of freedom with respect to said second control unit;
**characterized by further comprising**
- abutting means (6) carried by said electrospindle unit (3) and arranged for abutting on a workpiece so as to maintain a desired relative position between the workpiece (P) and a tool (5) carried by said tool holder (4), wherein a possible irregularity of the workpiece (P) **can be** compensated by said movement of said electrospindle unit (3) with respect to said second control unit to maintain the contact of said abutting means (6) against the workpiece.

2. Head according to claim 1, wherein said movement comprises a linear movement parallel to a rotation axis of said tool holder (4).

3. Head according to claim 1 or 2, wherein said electrospindle unit (3) is coupled with said second control unit of the second axis (A) by sliding guiding means (12), said head (1) comprising a slide (10) that supports said electrospindle unit (3), said slide (10) being slidably coupled, by said guiding means (12), on a base (11) carried by said second control unit of the second axis (A).

4. Head according to claim 3, wherein said slide (10) comprises at least one plate-shaped portion, said base (11) comprising at least one plate-shaped portion, said plate-shaped portions facing parallel to one another with the interposition of runner block means (17).

5. Head according to any preceding claim, comprising actuating means (13) arranged for controlling said movement of said electrospindle unit (3) with respect to said second control unit of the second axis (A), said head (1) comprising programmable electronic control means for controlling said actuating means (13) so as to adjust a contact force between said abutting means (6) and the workpiece.

6. Head according to claim 5, wherein said actuating means (13) comprises at least one linear actuator.

7. Head according to claim 5 or 6, wherein said actuating means (13) is of the operating fluid drive type and is controlled by valve means (8) of proportional type.

8. Head according to any one of claims 5 to 7, wherein said control means comprises means for adjusting the contact force between said abutting means (6) and the workpiece as a function of an angle of said second controlled axis (A).

9. Head according to any preceding claim, comprising braking means (14) arranged for immobilising said electrospindle unit (3) with respect to said second axis (A) in one or more desired positions.

10. Head according to any preceding claim, comprising: rolling supporting means (7) for supporting said abutting means (6) on said tool holder (4); and anti-rotation means (9) for fastening said abutting means (6) to a fixed part of said electrospindle unit (3) to prevent said abutting means (6) being rotated by said tool holder (4).

11. Head according to any preceding claim, comprising: rolling supporting means (7) for supporting said abutting means (6) on said tool holder (4); and positioning means for adjusting an angular position of said abutting means (6) with respect to said tool holder (4).

12. Head according to claim 11, wherein said positioning means comprises driving means (15) arranged on said electrospindle unit (3) to rotate said abutting means (6).

13. Numerically controlled machining centre with five controlled axes with at least one machining head (1) according to any preceding claim.

## Patentansprüche

1. Doppeldrehbarer Arbeitskopf (1) mit zwei kontrollierten Achsen (C; A), umfassend:
- eine erste Kontrolleinheit einer ersten Achse (C);
- eine zweite Kontrolleinheit einer zweiten Achse (A);
- eine Elektrospindeleinheit (3), aufweisend einen Motor zur Drehung eines Werkzeughalters (4), wobei die Elektrospindeleinheit (3) durch die zweite Kontrolleinheit mit der Möglichkeit einer Bewegung mit mindestens einem Freiheitsgrad in Bezug auf die zweite Kontrolleinheit getragen wird;
ferner **gekennzeichnet durch** Umfassen von
- Anschlagmitteln (6), welches durch die Elektrospindeleinheit (3) getragen wird, und zum Anschlagen an ein Werkstück eingerichtet ist, so dass eine gewünschte relative Position zwischen dem Werkstück (P) und einem Werkzeug (5), welches durch den Werkzeughalter (4) getragen wird, aufrechterhalten wird, wobei eine mögliche Unregelmäßigkeit des Werkstücks (P) durch die Bewegung der Elektrospindeleinheit (3) im Verhältnis zu der zweiten Kontrolleinheit kompensiert werden kann, um den Kontakt des Anschlagsmittels (6) an dem Werkstück aufrechtzuerhalten.

2. Kopf gemäß Anspruch 1, wobei die Bewegung eine lineare Bewegung parallel zu einer Rotationsachse des Werkzeughalters (4) umfasst.

3. Kopf gemäß Anspruch 1 oder 2, wobei die Elektrospindeleinheit (3) mit der zweiten Kontrolleinheit der zweiten Achse (A) durch verschiebbare Führungsmittel (12) gekoppelt ist, wobei der Kopf (1) umfassend einen Schieber (10), welcher die Elektrospindeleinheit (3) abstützt, wobei der Schieber (10) durch das Führungsmittel (12) auf einer Basis (11), welche durch die zweite Kontrolleinheit der zweiten Achse (A) getragen wird, verschiebbar gekoppelt ist.

4. Kopf gemäß Anspruch 3, wobei der Schieber (10) mindestens einen plattenförmigen Teil umfasst, wobei die Basis (11) mindestens einen plattenförmigen Teil umfasst, wobei die plattenförmigen Teile einander parallel zugewandt sind mit der Zwischenpositionierung von Läuferblockmitteln (17).

5. Kopf gemäß einem der vorhergehenden Ansprüche, umfassend Betätigungsmittel (13), welche zur Kontrolle der Bewegung der Elektrospindeleinheit (3) im Verhältnis zu der zweiten Kontrolleinheit der zweiten Achse (A) ausgestaltet ist, wobei der Kopf (1) programmierbare elektronische Kontrollmittel zur Kontrolle der Betätigungsmittel (13) umfasst, um die Kontaktkraft zwischen das Anschlagmittel (6) und dem Werkstück zu adjustieren.

6. Kopf gemäß Anspruch 5, wobei das Betätigungsmittel (13) mindestens ein lineares Betätigungsmittel umfassen.

7. Kopf gemäß Anspruch 5 oder 6, wobei das Betätigungsmittel (13) ein Betätigungsmittel des Betriebsflüssigkeitsantriebstyps ist und durch Ventilmittel (8) eines proportionalen Typs kontrolliert ist.

8. Kopf gemäß einem der Ansprüche 5 bis 7, wobei die Kontrollmittel Mittel zur Adjustierung der Kontaktkraft zwischen dem Betätigungsmittel (6) und dem Werkstück als Funktion eines Winkels der zweiten kontrollierten Achse (A) umfassen.

9. Kopf gemäß einem der vorhergehenden Ansprüche, umfassend Bremsmittel (14), ausgestaltet zur Immobilisierung der Elektrospindeleinheit (3) im Verhältnis zu der zweiten Achse (A) in einer oder mehreren gewünschten Positionen.

10. Kopf gemäß einem der vorhergehenden Ansprüche, umfassend: rollende Unterstützungsmittel (7) zur Stützung der Betätigungsmittel (6) auf dem Werkzeughalter (4); und Anti-Rotationsmittel (9) zur Fixierung der Betätigungsmittel (6) an einen fixierten Teil der Elektrospindeleinheit (3) zur Verhinderung der Rotation der Betätigungsmittel (6) durch den Werkzeughalter (4).

11. Kopf gemäß einem der vorergehenden Ansprüche, umfassend: rollendes Stützmittel (7) zur Stützung der Betätigungsmittel (6) auf dem Werkzeughalter (4); und Positionierungsmittel zur Adjustierung einer Winkelposition des Betätigungsmittels (6) im Verhältnis zu dem Werkzeughalter (4).

12. Kopf gemäß Anspruch 11, wobei diese Positionierungsmittel Antriebsmittel (15) umfasst, welche auf der Elektrospindeleinheit (3) zur Rotation des Betätigungsmittels (6) angeordnet sind.

13. Numerisch kontrolliertes Bearbeitungszentrum mit fünf kontrollierten Achsen mit mindestens einem Arbeitskopf (1) gemäß einem der vorhergehenden Ansprüche.

## Revendications

1. Tête d'usinage bi-rotative (1) avec deux axe commandés (C ; A), comprenant :
- une première unité de commande d'un premier axe (C) ;
- une seconde unité de commande d'un second axe (A) ;
- une unité d'électrobroche (3) ayant un moteur pour faire tourner un porte-outil (4), ladite unité d'électrobroche (3) étant portée par ladite seconde unité de commande avec la possibilité de mouvement avec au moins un degré de liberté par rapport à ladite seconde unité de commande ;
**caractérisée** ce qu'elle comprend en outre
- des moyens de butée (6) portés par ladite unité d'électrobroche (3) et agencés pour venir en butée sur une pièce de travail de manière à maintenir une position relative voulue entre la pièce de travail (P) et un outil (5) porté par ledit porte-outil (4), dans laquelle une irrégularité possible de la pièce de travail (P) peut être compensée par ledit mouvement de ladite unité d'électrobroche (3) par rapport à ladite seconde unité de commande pour maintenir le contact desdits moyens de butée (6) contre la pièce de travail.

2. Tête selon la revendication 1, dans laquelle ledit mouvement comprend un mouvement linéaire parallèle à un axe de rotation dudit porte-outil (4).

3. Tête selon la revendication 1 ou 2, dans laquelle ladite unité d'électrobroche (3) est couplée à ladite seconde unité de commande du second axe (A) en faisant glisser des moyens de guidage (12), ladite tête (1) comprenant un coulisseau (10) qui supporte ladite unité d'électrobroche (3), ledit coulisseau (10) étant couplé de manière coulissante, par lesdits moyens de guidage (12), sur une base (11) portée par ladite seconde unité de commande sur le second axe (A).

4. Tête selon la revendication 3, dans laquelle ledit coulisseau (10) comprend au moins une partie en forme de plaque, ladite base (11) comprenant au moins une partie en forme de plaque, lesdites parties en forme de plaques étant dirigées parallèlement les unes aux autres avec l'interposition de moyens de bloc de course (17).

5. Tête selon l'une quelconque des revendications précédentes, comprenant des moyens d'actionnement (13) agencés pour commander ledit mouvement de ladite unité d'électrobroche (3) par rapport à ladite seconde unité de commande du second axe (A), ladite tête (1) comprenant des moyens de commande électroniques programmables pour commander lesdits moyens d'actionnement (13) de manière à régler une force de contact entre lesdits moyens de butée (6) et la pièce de travail.

6. Tête selon la revendication 5, dans laquelle lesdits moyens d'actionnement (13) comprennent au moins un actionneur linéaire.

7. Tête selon la revendication 5 ou 6, dans laquelle lesdits moyens d'actionnement (13) sont du type à entraînement par fluide de travail et sont commandés par des moyens de vanne (8) de type proportionnel.

8. Tête selon l'une quelconque des revendications 5 à 7, dans laquelle lesdits moyens de commande comprennent des moyens pour régler la force de contact entre lesdits moyens de butée (6) et la pièce de travail en fonction d'un angle dudit second axe commandé (A).

9. Tête selon l'une quelconque des revendications précédentes, comprenant des moyens de freinage (14) agencés pour immobiliser ladite unité d'électrobroche (3) par rapport audit second axe (A) dans une ou plusieurs positions voulues.

10. Tête selon l'une quelconque des revendications précédentes comprenant : des moyens de support à roulement (7) pour supporter lesdits moyens de butée (6) sur ledit porte-outil (4) ; et des moyens anti-rotation (9) pour fixer lesdits moyens de butée (6) à une partie fixe de ladite unité d'électrobroche (3) pour empêcher lesdits moyens de butée (6) d'être mis en rotation par ledit porte-outil (4).

11. Tête selon l'une quelconque des revendications précédentes comprenant : des moyens de support à roulement (7) pour supporter lesdits moyens de butée (6) sur ledit porte-outil (4) ; et des moyens de positionnement pour régler une position angulaire desdits moyens de butée (6) par rapport audit porte-outil (4).

12. Tête selon la revendication 11, dans laquelle lesdits moyens de positionnement comprennent des moyens d'entraînement (15) agencés sur ladite unité d'électrobroche (3) pour faire tourner lesdits moyens de butée (6).

13. Centre d'usinage à commande numérique ayant cinq axes commandés avec au moins une tête d'usinage (1) selon l'une quelconque des revendications précédentes.
